# EUROPÄISCHE PATENTSCHRIFT

(11) **EP 2 323 343 B1**
(45) Veröffentlichungstag und Bekanntmachung des Hinweises auf die Patenterteilung: **08.01.2014**
(21) Anmeldenummer: 10190827.5
(22) Anmeldetag: 11.11.2010
(51) Int. Cl.: H04W 4/00, H04L 29/08, H04W 4/14

(54) **Starten eines Netzdienstes in einem Kommunikationsnetzwerk**
Starting a network service in a communication network
Démarrage d'un service de réseau dans un réseau de communication

(30) Priorität: 13.11.2009 DE 102009052815
(43) Veröffentlichungstag der Anmeldung: 18.05.2011
(73) Patentinhaber: Vodafone Holding GmbH, 40213 Düsseldorf (DE)
(72) Erfinder: Famulla, Frank, 40237 Düsseldorf (DE); Hengels, Erik, 41352 Korschenbroich (DE)
(74) Vertreter: Jostarndt, Hans-Dieter

(56) Entgegenhaltungen:
- EP-A1- 1 571 864
- WO-A1-2007/115754
- Dialogic: "USSD Services for Interactive Mobile Users", , 1. August 2008 (2008-08-01), XP002621751, Gefunden im Internet: URL:http://www.dialogic.com/products/docs/ appnotes/11038_USSD_an.pdf [gefunden am 2011-02-10]
- "OMA Device Management Notification Initiated Session", INTERNET CITATION, 23 February 2007 (2007-02-23), pages 1-16, XP002547611, Retrieved from the Internet: URL:http://member.openmobilealliance.org/f tp/public_documents/dm/Permanen t_documents/OMA-TS-DM_Notification-V1_2-20 070209-A.zip [retrieved on 2009-09-25]

## Beschreibung

### Beschreibung

Die Erfindung bezieht auf Netzdienste, die in einem Kommunikationsnetzwerk mittels eines Kommunikationsendgeräts genutzt werden können. Insbesondere betrifft die Erfindung ein Verfahren zum Starten eines Netzdienstes in einem Kommunikationsnetzwerk und ein Kommunikationsendgerät, das zur Durchführung des Verfahrens geeignet ist, sowie eine zur Durchführung des Verfahrens geeignete Servereinrichtung.

Mobilfunknetzwerke stellen oftmals einen Übermittlungsdienst für den Austausch von Informationen zwischen einem mit dem Mobilfunknetzwerk verbundenen Kommunikationsendgerät und einem Dienstserver des Mobilfunknetzwerks bereit. Ein Beispiel für einen solchen Übermittlungsdienst, der in GSM- und UMTS-Netzwerken bereitgestellt werden kann, wird als USSD (Unstructured Supplementary Services Data) bezeichnet und ist in den 3GPP-Dokumenten GSM 02.90, GSM 03.90 und GSM 04.90 bzw. TS 22.90 und TS 23.90 erläutert (GSM: Global System for Mobile Communications; UMTS: Universal Mobile Telecommunications System). USSD-Nachrichten werden über einen Signalisierungskanal des Mobilfunknetzwerks transparent, d.h. für den Nutzer unsichtbar, zwischen einem Kommunikationsendgerät und dem Dienstserver ausgetauscht und in der Regel für den Zugriff auf Dienste bzw. Applikationen des Mobilfunknetzwerks verwendet.

Im Rahmen von Netzdiensten, die auf der Grundlage von USSD implementiert werden, kann beispielsweise auf Funktionen des Netzwerks, wie etwa die Rufumleitung, zugriffen werden, oder es können vorgegebene Informationen zur Anzeige an einem Kommunikationsendgerät bereitgestellt werden. Ferner können beispielsweise auch Menüs - so genannte USSD-Menüs - bereitgestellt werden, die an Kommunikationsendgeräten angezeigt werden und aus denen die Nutzer Menüpunkte auswählen können. Die Auswahl der Nutzer kann über den Übermittlungsdienst an den Dienstserver gemeldet werden.

Die Funktionalitäten von auf USSD basierenden Netzdiensten können für viele Anwendungen eingesetzt werden, insbesondere wenn ein Anbieter einer Anwendung einem Nutzer Informationen oder Auswahlmenüs zur Anzeige an seinem Kommunikationsendgerät bereitstellen möchte. Dabei könnte der Netzdienst grundsätzlich durch den Nutzer des Kommunikationsendgeräts anhand einer entsprechenden Eingabe gestartet werden ("Mobile Initiated USSD operations"). Dies wäre jedoch umständlich für den Nutzer. Daher wäre es wünschenswert, dass der Netzdienst automatisch von den Systemen des Betreibers des Mobilfunknetzwerks und von Dritten gestartet werden könnte. Hierzu könnte der Netzdienst netzwerkseitig, d.h. durch den entsprechenden Dienstserver des Mobilfunknetzwerks initiiert werden ("Network initiated USSD operations"), wie in den zuvor genannten Standarddokumenten beschrieben. Dabei müsste jedoch eine Schnittstelle für den externen Zugriff auf den Dienstserver vorgesehen werden. Die Einrichtung solcher Schnittstellen ist jedoch in der Regel mit einem hohen Aufwand für den Netzbetreiber verbunden.

In Bezug auf die Nutzung von Diensten eines IP Multimedia Subsystem (IMS) beschreibt die WO 2007/115754 A1 ein Verfahren zur Registrierung im IMS. Die Registrierung wird durch eine Kurznachricht initiiert, die vom Netzwerk an das Endgerät gesendet und an einen SIP bzw. IMS-Client des Endgeräts weitergeleitet wird. Der Client wird durch die Kurznachricht veranlasst, eine herkömmliche IMS-Registrierung anzustoßen, wie sie im IMS-Standard definiert ist. Dabei sendet der Client eine SIP Register Nachricht an das IMS. Die EP 1 571 864 A1 offenbart gleichfalls ein Verfahren, bei dem die Registrierung eines Endgeräts im IMS mittels einer Kurznachricht an das Endgerät initiiert wird. Nach dem Empfang der Nachricht registriert sich das Endgerät automatisch im IMS.

Es ist eine Aufgabe der Erfindung, einen automatischen Start eines auf einem Übermittlungsdienst, insbesondere auf USSD, basierenden Netzdienstes zu ermöglichen und den Aufwand für die Bereitstellung der dafür erforderlichen Infrastruktur möglichst gering zu halten.

Die Aufgabe wird gelöst durch ein Verfahren mit den Merkmalen des Anspruchs 1, ein Kommunikationsendgerät mit den Merkmalen des Anspruchs 13 und eine Servereinrichtung mit den Merkmalen des Anspruchs 14. Ausgestaltungen des Verfahrens, des Kommunikationsendgeräts und der Servereinrichtung sind in den abhängigen Ansprüchen angegeben.

Gemäß einem ersten Aspekt der Erfindung wird ein Verfahren zum Zugreifen auf einen Netzdienst in einem Kommunikationsnetzwerk vorgeschlagen, bei dem ein mit dem Kommunikationsnetzwerk verbundenes Kommunikationsendgerät eine Netzdienstanforderung zum Aufruf des Dienstes an das Kommunikationsnetzwerk sendet. Das Verfahren zeichnet sich dadurch aus, dass in dem Kommunikationsendgerät eine Nachricht einer Servereinrichtung mit wenigstens einer Anweisung empfangen und an eine Einrichtung des Kommunikationsendgeräts weitergeleitet wird und die Einrichtung aufgrund des Empfangs der Nachricht das Senden der Netzdienstanforderung in Abhängigkeit von der Anweisung steuert.

Gemäß einem weiteren Aspekt der Erfindung wird ein Kommunikationsendgerät zur Nutzung eines Netzdienstes in einem Kommunikationsnetzwerk bereitgestellt. Das Kommunikationsendgerät ist mit dem Kommunikationsnetzwerk verbindbar und dazu ausgestaltet, eine Netzdienstanforderung zum Aufruf des Netzdienstes an das Kommunikationsnetzwerk zu senden. In dem Kommunikationsendgerät ist eine Einrichtung enthalten, die dazu konfiguriert ist, eine Nachricht einer Servereinrichtung mit wenigstens einer Anweisung zu empfangen und das Senden der Netzdienstanforderung aufgrund des Empfangs der Nachricht in Abhängigkeit von der Anweisung zu steuern.

Darüber hinaus wird gemäß einem Aspekt der Erfindung eine Servereinrichtung zum Initiieren eines Netzdienstes für ein mit einem Kommunikationsnetzwerk verbundenes Kommunikationsendgerät bereitgestellt. Die Servereinrichtung ist mit dem Kommunikationsnetzwerk verbindbar und dazu ausgestaltet, eine Nachricht zu erzeugen und über das Kommunikationsnetzwerk an das Kommunikationsendgerät zu senden. Die Nachricht enthält wenigstens eine Anweisung, die es einer Einrichtung des Kommunikationsendgeräts ermöglicht, eine Übermittlung einer Netzdienstanforderung zum Starten des Netzdienstes von dem Kommunikationsendgerät an das Kommunikationsnetzwerk zu steuern.

Die Erfindung beinhaltet die Idee, den Start des Netzdienstes durch eine Nachricht mit einer Anweisung auszulösen, die an ein Kommunikationsendgerät gesendet wird. Dieses startet daraufhin den Netzdienst durch eine Netzdienstanforderung, die an das Kommunikationsnetzwerk gesendet wird. Die Nachricht mit der Anweisung wird von einer Servereinrichtung abgesendet.

Bei der Servereinrichtung kann es sich um das System des Betreibers des Kommunikationsnetzwerks oder eines Dritten handeln, von dem die Initiative zum Starten des Netzdienstes ausgeht. In diesem Fall brauchen keinerlei zusätzliche Schnittstellen für den Zugriff auf die mit dem Netzdienst verknüpften Komponenten des Mobilfunkfunknetzwerks vorgesehen werden, um den Netzdienst automatisch zu starten. Hierdurch wird die zum Starten des Netzdienstes erforderliche Infrastruktur wesentlich vereinfacht.

Gleichfalls kann es sich bei der Servereinrichtung um einen OTA-Server handeln, der dazu ausgestaltet ist, Anweisungen enthaltene Nachrichten auf manipulationssichere Weise an Kommunikationsendgeräte zu senden (OTA: Over the Air). Hierdurch kann verhindert werden, dass Anweisungen missbräuchlich in dem Kommunikationsendgerät zur Ausführung gelangen. Allerdings wird in diesem Fall eine Schnittstelle zwischen dem OTA-Server und dem System benötigt, das den Netzdienst initiieren möchte. Eine solche Schnittstelle kann jedoch gegebenenfalls mit weniger Aufwand eingerichtet werden als eine Schnittstelle für den Zugriff auf den Dienstserver, der den Netzdienst bereitstellt. Darüber hinaus kann eine entsprechende Schnittstelle des OTA-Servers in der Regel auch für andere Anwendungen als die hier erläuterte Initiierung von Netzdiensten verwendet werden. Somit braucht keine zusätzliche Schnittstelle für die Initiierung des Netzdienstes eingereicht zu werden. Auch in dieser Ausgestaltung wird somit der Aufwand zur Bereitstellung der zum Starten des Netzdienstes erforderlichen Infrastruktur verringert.

In einer Ausgestaltung des Verfahrens, des Kommunikationsendgeräts und der Servereinrichtung ist vorgesehen, dass die Nachricht in dem Kommunikationsendgerät transparent zu der Einrichtung weitergleitet wird. Das bedeutet, dass die Nachricht unsichtbar für den Nutzer des Kommunikationsendgeräts weitergeleitet wird. Dies hat den Vorteil, dass der vorgesehene Mechanismus zum Starten des Netzdienstes vor dem Nutzer verborgen werden kann und dieser nicht durch die Weiterleitung der Nachricht abgelenkt wird.

Eine weitere Ausgestaltung des Verfahrens, des Kommunikationsendgeräts und der Servereinrichtung sieht vor, dass es sich bei der Nachricht um eine Kurznachricht, insbesondere eine SMS-Nachricht, handelt (SMS: Short Message Service). Es hat sich gezeigt, dass derartige Kurznachrichten besonders gut dazu geeignet sind, die vorgesehene Anweisung für die Einrichtung des Kommunikationsendgeräts an dieses zu übermitteln.

Eine Ausführungsform des Verfahrens, des Kommunikationsendgeräts und der Servereinrichtung sieht vor, dass die Einrichtung eine Softwareapplikation in einer SIM-Karte des Kommunikationsendgeräts umfasst. Unter einer SIM-Karte wird hier allgemein eine Chipkarte verstanden, die verwendet wird, um das Kommunikationsendgerät und/oder seinen Nutzer zu identifizieren und/oder zu authentisieren. Die SIM-Karte kann ein SIM (Subscriber Identification Module) nach dem GSM-Standard umfassen. Der Begriff ist jedoch nicht auf derartige SIM-Karten beschränkt, sondern umfasst auch SIM-Karten die in anderer Weise ausgestaltet sind.

Im Hinblick auf den Start des Netzdienstes hat sich gezeigt, dass SIM-Karten sich aufgrund ihrer Funktionalitäten besonders gut für eine Verwendung innerhalb des vorgesehenen Mechanismus zum Starten des Netzdienstes eignen. Dies liegt zum einen daran, dass Anweisungen mittels eines OTA-Mechanismus anhand einer Kurznachricht in einfacher Weise an eine SIM-Karte übermittelt werden können. Zum anderen können SIM-Karten in der Regel mithilfe von Befehlen eines so genannten Card Application Toolkit (CAT) insbesondere das Versenden von Nachrichten, wie der Netzdienstanforderung, steuern.

Wie eingangs erläutert kann dem vorgesehenen Netzdienst ein Übermittlungsdienst zugeordnet sein, über den der Netzdienst bereitgestellt wird. Daher sieht eine Ausgestaltung des Verfahrens, des Kommunikationsendgeräts und der Servereinrichtung vor, dass die Netzdienstanforderung über einen dem Netzdienst zugeordneten Übermittlungsdienst übermittelt wird, insbesondere als eine USSD-Nachricht.

Eine Ausführungsform des Verfahrens, des Kommunikationsendgeräts und der Servereinrichtung zeichnet sich dadurch aus, dass die Netzdienstanforderung in der Einrichtung erzeugt wird und die Einrichtung das Kommunikationsendgerät anweist, die Netzdienstanforderung mittels des Übermittlungsdienstes zu senden. Auf diese Weise kann die Netzdienstanforderung zweckmäßig erzeugt und versendet werden, wenn die Einrichtung dazu in der Lage ist, das Kommunikationsendgerät zur Übermittlung von Nachrichten über den Übermittlungsdienst zu informieren.

In einer weiteren Ausführungsform des Verfahrens, des Kommunikationsendgeräts und der Servereinrichtung ist vorgesehen, dass die Einrichtung nach Maßgabe der Anweisung Signalisierungsinformationen bereitstellt, insbesondere Signalisierungsinformationen zum Aufbau eines Anrufs, und die Netzdienstanforderung in dem Kommunikationsendgerät anhand der Signalisierungsinformationen erzeugt und dem Übermittlungsdienst zugeordnet wird. Dies ermöglicht es insbesondere, dass die Einrichtung das Absenden der Netzdienstanforderung auch dann steuern kann, wenn sie nicht dazu in der Lage ist, das Kommunikationsendgeräte direkt dazu zu instruieren, Nachrichten über den Übermittlungsdienst zu versenden.

Ein Ausgestaltung des Verfahrens, des Kommunikationsendgeräts und der Servereinrichtung zeichnet sich zudem dadurch aus, dass die Einrichtung ein CAT-Kommando verwendet, um die Kommunikationsendgerät anzuweisen, die Netzdienstanforderung zu senden, oder die Signalisierungsinformationen bereitzustellen. Ein CAT ist eine vorgegebene Sammlung von Befehlen, die es einer SIM-Karte insbesondere ermöglichen, auf Funktionen des Endgeräts zuzugreifen. Vorteilhaft werden diese Befehle hier verwendet, um das Absenden der Netzdienstanforderung zu steuern.

Darüber hinaus beinhaltet eine Ausführungsform des Verfahrens, des Kommunikationsendgeräts und der Servereinrichtung, dass die Netzdienstanforderung in dem Kommunikationsnetzwerk an einen dem Netzdienst zugeordneten Dienstserver weitergeleitet wird, der den Netzdienst aufgrund des Empfangs der Netzdienstanforderung für das Kommunikationsendgerät bereitstellt. Weiterhin ist eine Weiterbildung des Verfahrens, des Kommunikationsendgeräts und der Servereinrichtung dadurch gekennzeichnet, dass der Netzdienst die Bereitstellung von vorkonfigurierten Informationen zur Anzeige an dem Kommunikationsendgerät umfasst, insbesondere ein Menü, aus dem mittels des Kommunikationsendgeräts eine Auswahl getroffen werden kann, die über den Übermittlungsdienst an das Kommunikationsnetzwerk gemeldet wird. Die Informationen und/oder die Meldung über die Auswahl werden in einer Ausbildungsform des Verfahrens, des Kommunikationsendgeräts und der Servereinrichtung anhand einer USSD-Nachricht übermittelt.

Die zuvor genannten und weitere Vorteile, Besonderheiten und zweckmäßige Weiterbildungen der Erfindung werden auch anhand der Ausführungsbeispiele deutlich, die nachfolgend unter Bezugnahme auf die Figuren beschrieben werden.

Von den Figuren zeigt:
- Fig. 1: eine schematische Darstellung eines Kommunikationsendgeräts, das mit einem Kommunikationsnetzwerk verbunden ist, in dem ein Netz- dienst verfügbar ist, der erfindungsgemäß gestartet werden kann, und
- Fig. 2: eine schematisches Ablaufdiagramm zur Veranschaulichung des Nach- richtenaustauschs zum erfindungsgemäßen Starten des Netzdienstes in einer Ausgestaltung.

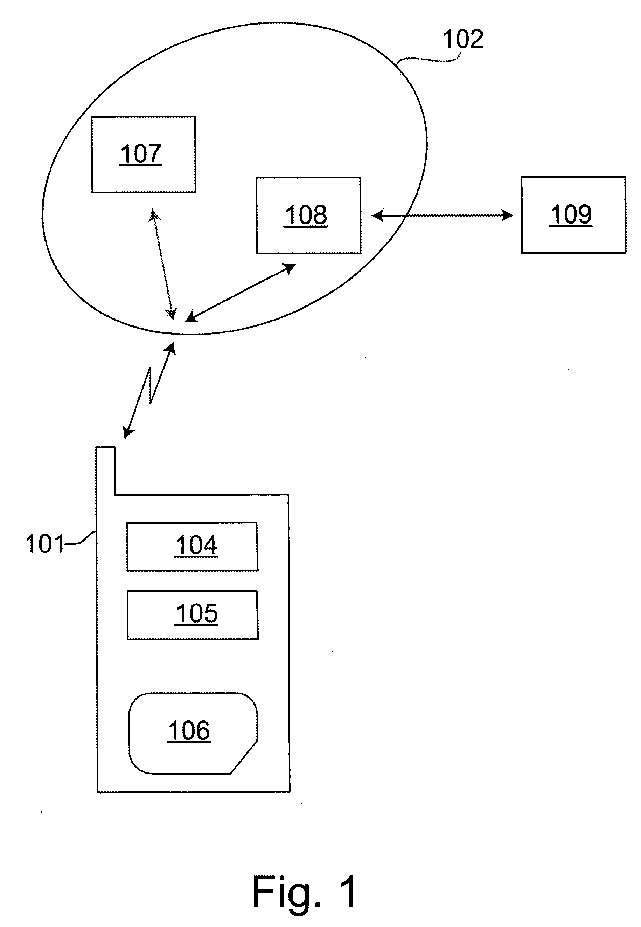

Figur 1 zeigt ein Kommunikationsendgerät 101, das in der dargestellten Situation mit einem Kommunikationsnetzwerk 102 verbunden ist. In der veranschaulichten Ausgestaltung handelt es sich bei dem Kommunikationsnetzwerk 102 um ein Mobilfunknetzwerk mit dem das Kommunikationsendgerät 101 drahtlos über eine Luftschnittstelle verbunden ist. Beispielsweise kann das Mobilfunknetzwerk nach dem GSM- oder dem UMTS-Standard ausgestaltet sein, es kann sich aber auch um ein anderes Mobilfunknetzwerk handeln.

Das Kommunikationsendgerät 101 umfasst ein Terminal, mit Benutzerschnittstellen 104 zur Ausgabe und Eingabe von Informationen sowie einer Steuereinheit 105 zur Steuerung der Funktionen des Kommunikationsendgeräts 101. Die Benutzerschnittstellen 104 können eine Anzeigeeinrichtung zur visuellen Darstellung von Informationen beinhalten sowie eine beispielsweise als Tastatur ausgebildete Eingabeeinrichtung für Eingaben des Nutzers. Darüber hinaus können die Benutzerschnittstellen 104 Ein- und Ausgabeeinrichtungen zur Ein- und Ausgabe von akustischen Informationen enthalten. Die Steuereinheit 105 ist beispielsweise als ein programmierbarer Mikroprozessor ausgestaltet, in dem Softwareprogramme zur Steuerung von Funktionen des Kommunikationsendgeräts 101 ausgeführt und Daten gespeichert werden können, die im Betrieb des Kommunikationsendgeräts 101 verwendet werden.

Das Terminal ist mit einer SIM-Karte 106 verbunden, die als eine Chipkarte ausgestaltet ist und in einen Kartenleser des Terminals eingesetzt werden kann. Die SIM-Karte 106 wird insbesondere dazu verwendet, das Kommunikationsendgerät 101 bzw. seinen Nutzer in dem Kommunikationsnetzwerk 102 zu identifizieren und/oder zu authentisieren. Die SIM-Karte 106 ist entsprechend dem Kommunikationsnetzwerk 102 ausgestaltet, in dem das Kommunikationsendgerät 101 betrieben wird. Wenn es sich hierbei um ein GSM-Netz handelt, dann umfasst die SIM-Karte 106 ein SIM nach dem GSM-Standard; wenn es sich bei dem Kommunikationsnetzwerk 102 um ein UMTS-Netzwerk handelt, dann beinhaltet die SIM-Karte 106 ein USIM (Universal Subscriber Identification Module) gemäß dem UMTS-Standard. In anderen Kommunikationsnetzwerken 102 sind gleichfalls andere Ausgestaltungen der SIM-Karte 106 möglich.

Mittels des Kommunikationsendgeräts 101 können Dienste genutzt werden, die von dem Kommunikationsnetzwerk 102 bereitgestellt werden. Neben der Vermittlung von Anrufen umfassen diese einen Übermittlungsdienst für den transparenten Austausch von Informationen zwischen dem Kommunikationsendgerät 101 und einem Dienstserver 107 des Kommunikationsnetzwerks 102. Die Transparenz des Informationsaustauschs bedeutet, dass die Informationsübermittlung als solche für den Nutzer des Kommunikationsendgeräts 101 nicht sichtbar ist (gleichwohl kann der Nutzer die Informationsübermittlung initiieren und/oder über dem Empfang von Informationen informiert werden). Vorzugsweise arbeitet der Übermittlungsdienst sitzungsorientiert, so dass ein Dialog zwischen dem Kommunikationsendgerät 101 und dem Dienstserver 107 ermöglicht wird.

Der Übermittlungsdienst kann für den Zugriff auf Dienste bzw. Applikationen des Kommunikationsnetzwerks 102 verwendet werden, die hier als Netzdienste bezeichnet werden. Beispiele für derartige Netzdienste sind das Setzen einer Rufumleitung oder die Bereitstellung von vorkonfigurierten Informationen zur Anzeige an dem Kommunikationsendgerät 101. Ferner kann im Rahmen eines Netzdienstes von dem Dienstserver 107 ein Menü über den Übermittlungsdienst bereitgestellt werden, das an dem Kommunikationsendgerät 101 angezeigt werden und aus dem der Nutzer einen Menüpunkt auswählen kann. Die Auswahl des Nutzers kann an den Dienstserver 107 gemeldet werden. Dies geschieht wiederum anhand einer mittels des Übermittlungsdienstes übermittelten Nachricht.

In einem Menü können in einer Ausführungsform zeilenweise verschiedene Menüpunkte mittels der Anzeigeeinrichtung des Kommunikationsendgeräts 101 dargestellt werden und den einzelnen Menüpunkten kann jeweils eine Ziffer zugeordnet sein. Die Auswahl eines Menüpunkts erfolgt in diesem Fall durch Eingabe der entsprechenden Ziffer mittels der Eingabeeinrichtung des Kommunikationsendgeräts 101. Diese Eingabe wird erfasst und an den Dienstserver 107 gemeldet. Dabei kann beispielsweise die eingegebene Ziffer übermittelt werden, und der Dienstserver 107 ermittelt anhand der Ziffer den ausgewählten Menüpunkt.

Die Übermittlung bzw. der Austausch von Nachrichten mittels des Übermittlungsdienstes erfolgt vorzugsweise über einen Signalisierungskanal des Kommunikationsnetzwerks 102 und kann grundsätzlich sowohl von dem Kommunikationsendgerät 101 als auch von dem Dienstserver 107 initiiert werden. Das Kommunikationsendgerät 101 beinhaltet zur Nutzung des Übermittlungsdienstes einen Diensthandler, der vorzugsweise als ein in der Steuereinheit 105 ausgeführte Applikation ausgestaltet ist. Über den Diensthandler können mittels des Übermittlungsdienstes übertragene Nachrichten gesendet und empfangen werden. Ferner ist der Diensthandler auch dazu ausgestaltet, empfangene Nachrichten auszuwerten und für die Nachrichten vorgesehene Funktionen auszuführen. So kann der Diensthandler die Darstellung von Menüs und anderen Informationen an dem Kommunikationsendgerät 101 steuern und Nutzereingaben, wie beispielsweise die Auswahl eines Menüpunkts, erfassen und über dem Übermittlungsdienst an den Dienstserver 107 melden. Alternativ kann der Diensthandler, empfangene Nachrichten auch zur Auswertung an eine weitere Applikation übergeben und von dieser Applikation erzeugte Nachrichten entgegennehmen und über den Übermittlungsdienst senden.

Die über den Übermittlungsdienst gesendeten Nachrichten können bestimmte Signalisierungsinformationen, so genannte Strings, aufweisen, die beispielsweise von dem Kommunikationsendgerät 101 für den Aufruf bestimmter Funktionen des Dienstservers 107 oder zum Abrufen vorgegebener Menüs oder Informationen verwendet werden können. Die Strings umfassen Folgen von Steuerzeichen, wie etwa "*" oder "#" und Zahlen. Sie können auch von dem Nutzer des Kommunikationsendgeräts 101 eingegeben werden. Die Eingabe kann beispielsweise durch die Betätigung einer Rufaufbautaste des Kommunikationsendgeräts 101 quittiert werden. Der Diensthandler des Kommunikationsendgeräts 101 ordnet die Strings dann dem Übermittlungsdienst zu und sendet eine entsprechende Nachricht über den Übermittlungsdienst an das Netzwerk anstatt etwa einen Rufaufbau vorzunehmen. Gleichfalls kann eine über den Übermittlungsdienst zu übertragende Nachricht auch direkt mittels einer Applikation in dem Kommunikationsendgerät 101 erzeugt werden. Die Applikation kann die Nachricht über den Diensthandler versenden oder selbst das Terminal direkt instruieren, die Nachricht abzusenden. In dem Kommunikationsnetzwerk 102 werden eingehende Nachrichten, die über den Übermittlungsdienst übertragen werden, beispielsweise in einer Vermittlungsstelle erkannt und an den Dienstserver 107 weitergeleitet.

In einem GSM- oder UMTS-Netzwerk kann der Übermittlungsdienst als USSD ausgestaltet sein. Wie eingangs bereits erläutert ist USSD insbesondere in den 3GPP-Dokumenten GSM 02.90, GSM 03.90 und GSM 04.90 bzw. TS 22.90 und TS 23.90 dargestellt. Die Nutzung von USSD ist in vielen GSM- und UMTS Netzwerken möglich und in der Regel kostenlos (was nicht für den anhand von USSD implementierten Netzdienst gelten muss). Ferner wird USSD von den meisten GSM- und/oder UMTS-fähigen Kommunikationsendgeräten 101 unterstützt, d.h., es ist ein als USSD-Handler bezeichneter Diensthandler zur Nutzung von USSD in den Kommunikationsendgeräten 101 enthalten.

Obwohl der Dienstserver 107 in der Regel vom Betreiber des Kommunikationsnetzwerks 102 betrieben wird, kann es für Dritte attraktiv sein, Netzdienste auszulösen, die von dem Dienstserver 107 über den Übermittlungsdienst bereitgestellt werden. So kann ein Dritter einem Kunden beispielsweise durch Starten eines entsprechenden Netzdienstens Informationen zugänglich machen, die vom Netzwerkbetreiber bereitgestellt werden und etwa von dem Dritten vorgegeben werden können. Eine weitere Anwendung ist beispielsweise die Durchführung der Bezahlung einer Rechnung des Dritten über die von dem Netzwerkbetreiber erstellte Telefonrechnung eines Nutzers oder ein Konto des Nutzers bei dem Netzwerkbetreiber. Hierzu kann der Dritte beispielsweise einen Dialog zwischen dem Dienstserver 107 und dem Kommunikationsnetzendgerät 101 initiieren, in dem der Nutzer die Buchung eines bestimmten Betrags bestätigt. Im Rahmen dieses Dialogs können Menüs verwendet werden, die es dem Nutzer beispielsweise ermöglichen können, die Buchung durch Auswahl entsprechender Menüpunkte zu bestätigen oder abzulehnen.

Der Start des Netzdienstes durch den Dritten erfolgt über das Kommunikationsendgerät 101 des Nutzers. Dies hat insbesondere den Vorteil, dass der Dienstserver 107 keine Schnittstellen für einen externen Zugriff benötigt, um den Netzdienst zu starten.

Innerhalb des Kommunikationsendgeräts 101 wird zum Starten des Netzdienstes automatisch eine Netzdienstanforderung erzeugt, die über den Übermittlungsdienst an den Dienstserver 107 bzw. das Kommunikationsnetzwerk 102 gesendet wird. Hierzu wird vorzugsweise eine Applikation eingesetzt, die in der SIM-Karte 106 des Kommunikationsendgeräts 101 installiert und ausgeführt wird. Bei der Netzdienstanforderung handelt es sich um eine über den Übermittlungsdienst zu übertragende Nachricht mit Signalisierungsinformationen, die es dem Dienstserver 107 ermöglichen, den gewünschten Dienst zu identifizieren und bereitzustellen. Beim Empfang der Netzdienstanforderung wird diese von dem Dienstserver 107 ausgewertet, und der Dienstserver 107 führt die angeforderten Operationen aus.

Die Applikation der SIM-Karte 106 nutzt Funktionen eines CAT. Hierbei handelt es sich um Sammlung von Befehlen, die es der SIM-Karte 106 insbesondere ermöglichen, von dem Terminal über Ereignisse wie beispielsweise eingehende Anrufe oder Kurznachrichten informiert zu werden und auf Funktionen und Komponenten des Terminals , wie beispielsweise die Benutzerschnittstellen 104, zuzugreifen. Ein solches CAT ist insbesondere in der ETSI-Spezifikation TS 102 223 beschrieben. Eine Implementierung für SIM-Karten 106 nach dem GSM-Standard ist unter der Bezeichnung SIM Application Toolkit (SAT) bekannt und wird in den 3GPP-Dokumenten TS 11.11 und TS 51.014 beschrieben. Für SIM-Karten 106 gemäß dem UMTS-Standard existiert ein entsprechendes USIM Application Toolkit (USAT), das in dem 3GPP-Dokument TS 31.111 beschrieben wird. CAT-Funktionen werden von den meisten ausgegebenen SIM-Karten 106 unterstützt.

Die Netzdienstanforderung wird in einer Ausgestaltung von der Applikation der SIM-Karte 106 ausgegeben. Anhand eines CAT-Befehls, mit dem das Terminal dazu instruiert werden kann, Nachrichten über den Übermittlungsdienst zu senden, wird die Netzdienstanforderung von der SIM-Karte 106 an das Terminal übergeben und das Terminal instruiert, die Netzdienstanforderung abzusenden. Dies geschieht vorzugsweise transparent, d.h. ohne Interaktion mit dem Nutzer des Kommunikationsendgeräts 101. Bei einem Kommunikationsendgerät 101, das in einem GSM- oder UMTS-Netzwerk genutzt wird, kann zu diesem Zweck der von dem SAT bzw. USAT bereitgestellte Befehl "Send USSD" verwendet werden.

In einer alternativen Ausführungsform, wird ein CAT-Befehl genutzt, der es der SIM-Karte 106 ermöglicht, eigenständig den Aufbau eine Sprachanrufs zu initiieren. Innerhalb des SAT und des USAT ist ein derartiger Befehl anhand des Kommandos "Set up call" implementiert. Unter Verwendung eines solchen Befehls wird das Terminal dazu instruiert, einen Anruf unter Verwendung einer Rufnummer aufzubauen. Als Rufnummer werden für die Netzdienstanforderung vorgesehenen Signalisierungsinformationen von der Applikation der SIM-Karte 106 an das Terminal übergeben. Der Diensthandler des Terminals ordnet die Signalisierungsinformationen dann, wie zuvor in Bezug auf nutzerseitig eingegebene Signalisierungsinformationen beschrieben, dem Übermittlungsdienst zu und steuert das Absenden einer Nachricht mit den Signalisierungsinformationen als Netzdienstanforderung an das Kommunikationsnetzwerk 102.

Nicht alle SIM-Karten 106 unterstützen sämtliche CAT-Befehle. Daher kann vorgesehen sein, den verwendeten Befehl in Abhängigkeit von den Fähigkeiten der SIM-Karte 106 auszuwählen. Sofern eine SIM-Karte 106 einen Befehl unterstützt, mit dem das Terminal instruiert wird, eine Nachricht über den Übermittlungsdienst zu senden, nicht jedoch einen Befehl zur Initiierung eines Sprachanrufs, wird der erstgenannte Befehl verwendet, um das Absenden der Netzdienstanforderung zu steuern. Wenn dieser Befehl von der SIM-Karte 106 hingegen nicht unterstützt wird, jedoch der Befehl zur Initiierung eines Sprachanrufs, dann wird der letztgenannte Befehl verwendet. Somit kann der Netzdienst mittels einer SIM-Karte 106 gestartet werden, die lediglich einen der beiden genannten CAT-Befehle unterstützt, wodurch der Netzdienst mittels einer besonders großen Anzahl von SIM-Karten 106 gestartet werden kann.

Um es dem Dritten zu ermöglichen, den Start des Netzdienstes zu veranlassen, ist vorgesehen, das zuvor beschriebene, durch die Applikation der SIM-Karte 106 gesteuerte Absenden der Netzdienstanforderung durch eine Nachricht an das Kommunikationsendgerät 101 auszulösen. Hierbei wird ein sogenannter OTA-Mechanismus genutzt, der es ermöglicht Nachrichten mit Anweisungen an die SIM-Karte 106 zu senden. Eine solche Nachricht wird über einen Nachrichtendienst des Kommunikationsnetzwerks 102, insbesondere über einen Kurznachrichtendienst, übermittelt und enthält eine Kennzeichnung, aufgrund derer das Terminal die Nachricht beim Empfang an die SIM-Karte 106 weiterleitet. Dies geschieht vorzugsweise wiederum transparent. In GSM- und UMTS-Netzwerken können derartige Kurznachrichten mittels des an sich bekannten SMS gesendet werden.

Die gesendete OTA-Nachricht enthält neben der zuvor beschriebenen Kennzeichnung Anweisungen, welche die Applikation der SIM-Karte 106 dazu instruieren, die Absendung der Netzdienstanforderung zu initiieren und zu steuern. Die Anweisungen umfassen in einer Ausgestaltung die Signalisierungsinformationen, die für die Netzdienstanforderung vorgesehen sind. Alternativ können die Signalisierungsinformationen auch in der SIM-Karte 106 hinterlegt sein. In diesem Fall können die Anweisungen einen Verweis auf hinterlegte Signalisierungsinformationen enthalten. Ferner kann anhand der Anweisungen ein CAT-Befehl vorgegeben werden, der von der Applikation der SIM-Karte 106 verwendet werden soll, um die das Absenden der Netzdienstanforderung zu initiieren. Dabei kann es ebenfalls vorgesehen sein, dass anhand der Anweisungen festgelegt wird, dass ein erster Befehl, beispielsweise der Befehl "Send USSD, verwendet werden soll, wenn er verfügbar ist, und ansonsten ein weiterer Befehl, beispielsweise "Set up Call", zu verwenden ist. Hierdurch wird erreicht, dass die Applikation der SIM-Karte 106 aus den möglichen Befehlen einen Befehl auswählt, der von der SIM-Karte 106 unterstützt wird.

Darüber hinaus kann die OTA-Nachricht kryptografisch derart gesichert sein, dass die SIM-Karte 106 prüfen kann, ob die OTA-Nachricht von einem berechtigten Absender stammt und unverändert empfangen worden ist. Eine Verarbeitung der OTA-Nachricht erfolgt in diesem Fall erst nach erfolgreichem Abschluss dieser Prüfung. Zur Absicherung kann etwa eine Authentifizierungsinformationen des Absenders in der OTA-Nachricht enthalten sein, beispielsweise eine digital Signatur, die in der SIM-Karte 106 geprüft wird, bevor die OTA-Nachricht weiterverarbeitet wird. Alternativ oder ergänzend wird die OTA-Nachricht zumindest teilweise mit einem geheimen OTA-Schlüssel verschlüsselt und in der SIM-Karte 106 entschlüsselt. Durch diese Maßnahmen wird verhindert, dass Unberechtigte den OTA-Mechanismus nutzen können, um auf die SIM-Karte 106 zuzugreifen.

In einer Ausgestaltung, die in den Figuren nicht dargestellt ist, wird die OTA-Nachricht von dem Dritten erzeugt und über das Kommunikationsnetzwerk 102 an das Kommunikationsendgerät 101. Die Weiterleitung der OTA-Nachricht im Kommunikationsnetzwerk 102 erfolgt dabei in der üblichen, für die Übermittlung von Kurnachrichten vorgesehenen Weise. Die OTA-Nachricht kann in dieser Ausgestaltung von einem Anbieterserver 109 des Dritten generiert und an das Kommunikationsnetzwerk 102 übergeben werden.

In einer weiteren, in den Figuren dargestellten Ausgestaltung wird die OTA-Nachricht von einem OTA-Server 108 des Kommunikationsnetzwerks 102 an das Kommunikationsendgerät 101 gesendet. Hierdurch kann die Sicherheit erhöht werden, da die kryptografischen Mechanismen zum Schutz des OTA-Mechanismus ausschließlich in dem OTA-Server 108 implementiert und somit besser vor dem Zugriff Unberechtigter geschützt sind. In dieser Ausgestaltung kann der Dritte mit dem OTA-Server 108 in Kommunikation treten, um das Senden der Kurznachricht zu veranlassen. Hierzu wird beispielsweise eine entsprechende Instruktion von dem Anbieterserver 109 des Dritten an den OTA-Server 108 gesendet, wenn ein Netzdienst gestartet werden soll. Die Instruktionen, die von dem Anbieterserver 109 gesendet werden, identifizieren den bereitzustellenden Netzdienst und die gegebenenfalls erforderlichen Parameter des Netzdienstes (wie etwa ein zu bezahlender Preis). Hierzu kann der Anbieterserver 109 bereits die Signalisierungsinformationen zur Anforderung des Netzdienstes bzw. die entsprechenden Verweise auf in der SIM-Karte 106 hinterlegte Signalisierungsinformationen übergeben, die ebenfalls den Netzdienst sowie die gegebenenfalls erforderlichen Parameter des Dienstes spezifizieren, oder der Anbieterserver 109 gibt diese Informationen in anderer Form an, und die Signalisierungsinformationen oder Verweise werden in dem OTA-Server 108 erzeugt. Darüber hinaus ist der Anbieterserver 109 vorzugsweise in dem OTA-Server 108 registriert, und der OTA-Server 108 prüft die Identität des Anbieterservers 109. Eine OTA-Nachricht wird in diesem Fall nur dann gesendet, wenn der OTA-Server 108 die Identität des Anbieterservers 109 erfolgreiche geprüft hat. Hierdurch wird verhindert, dass Unberechtigte den Start des Netzdienstes veranlassen können.

Wenn die OTA-Nachricht von dem OTA-Server 108 erzeugt und versendet wird, kann der Netzdienst ebenfalls mittels eines Anbieterservers 109 initiiert werden, ohne eine Schnittstelle für einen Zugriff des Anbieterservers 109 auf den Dienstserver 107 vorsehen zu müssen. Zur Kommunikation zwischen dem Anbieterserver 109 und dem OTA-Server 108 muss jedoch eine entsprechende Schnittstelle des OTA-Servers 108 vorhanden sein. Diese Schnittstelle kann jedoch je nach Ausgestaltung des OTA-Servers 108 und des Dienstservers 107 mit weniger Aufwand zu implementieren sein als eine Schnittstelle zwischen dem Dienstserver 107 und dem Anbieterserver 109. Darüber hinaus kann eine entsprechende Schnittstelle des OTA-Servers 108 in der Regel auch für andere Anwendungen als die hier erläuterte Initiierung von Netzdiensten verwendet werden und ist daher oftmals bereits vorhanden. Die vorliegende Erfindung ermöglicht es, eine solche Schnittstelle zur Initiierung von Netzdiensten "mitzunutzen". Damit wird vermieden, dass der Betreiber des Kommunikationsnetzwerks 102 eine zusätzliche Schnittstelle für den externen Zugriff auf den Dienstserver 107 vorsehen muss.

Das Absenden der der OTA-Nachricht durch den Anbieterserver 109 oder den OTA-Server 108 kann beispielsweise während einer Interaktion zwischen dem Anbieterserver 109 und dem Nutzer des Kommunikationsendgeräts 101 vorgenommen werden. Eine solche Interaktion kann unter Verwendung des Kommunikationsendgeräts 101 über das Kommunikationsnetzwerk 102 erfolgen oder in anderer Weise. So kann der Nutzer etwa mit einem weiteren Gerät, wie beispielsweise einem PC (Personal Computer), über ein anderes, in der Figur 1 nicht dargestelltes Netzwerk, wie beispielsweise das Internet, auf den Anbieterserver 109 zugreifen. In einer Ausgestaltung kann der Anbieterserver 109 einen Online-Shop umfassen, in dem der Nutzer mittels seines PC einkauft. Zum Bezahlen der Einkäufe kann dabei in der zuvor beschriebenen Weise einen Netzdienst genutzt werden, der während des Einkaufs oder im Anschluss daran bereitgestellt wird.

In der zuvor beschriebenen Weise kann ein Dritter Netzdienste starten, die von dem Betreiber des Kommunikationsnetzwerks 102 angeboten werden. Hierbei kann es auch vorgesehen sein, dass der Netzdienst zuvor von dem Dritten bzw. nach seinen Anweisungen konfiguriert worden ist. D.h., der Dritte kann beispielsweise vorab Informationen und/oder Menüs hinterlegen, die im Rahmen des Netzdienstes an das Kommunikationsendgerät 101 gesendet werden sollen. Damit wird dem Dritten eine Möglichkeit gegeben, eigene Dienste als Netzdienste über das Kommunikationsnetzwerk 102 bereitzustellen.

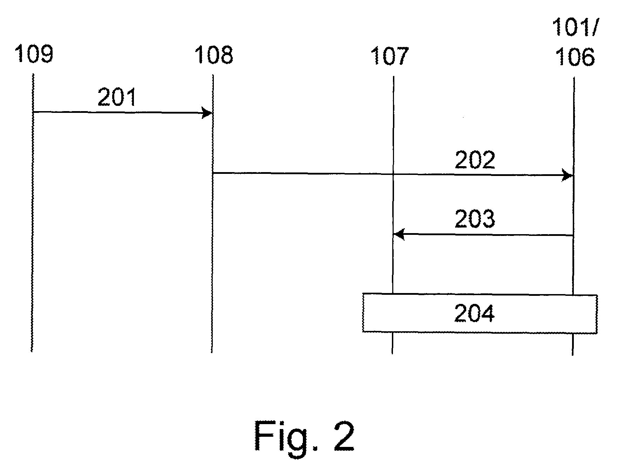

In Figur 2 sind Schritte des zuvor erläuterten Vorgehens in einer Ausgestaltung, in der die OTA-Nachricht von dem OTA-Server 108 erzeugt und gesendet wird, in einem Ablaufdiagramm dargestellt. Die senkrechten Striche symbolisieren Einheiten, die an der Ausführung der Schritte beteiligt sind, und die waagerechten Pfeile stehen für Nachrichten bzw. Informationen die in den entsprechenden Schritten zwischen den Einheiten ausgetauscht werden. Die Zeitachse verläuft von oben nach unten, d.h., weiter unten angegeben Nachrichten werden zeitlich nach darüber angegeben Nachrichten gesendet.

Der in Figur 2 gezeigte Schritt 201 bezieht sich auf die zuvor erläuterte Instruktion, die von dem Anbieterserver 109 an den OTA-Server 108 gesendet wird. Aufgrund des Empfangs der Instruktion sendet der OTA-Server 108 in Schritt 202 die OTA-Nachricht mit den Anweisungen zum Starten des Netzdienstes an das Kommunikationsendgerät 101 bzw. die SIM-Karte 106 des Kommunikationsendgeräts 101. In der SIM-Karte 106 wird die OTA-Nachricht durch die hierfür vorgesehene Applikation ausgewertet. Unter Berücksichtigung der in der OTA-Nachricht enthaltenen Anweisungen steuert die Applikation der SIM-Karte 106 dann die Absendung der Netzdienstanforderung, die in dem Schritt 203 von dem Kommunikationsendgerät 101 über das Kommunikationsnetzwerk 102 an den Dienstserver 107 gesendet wird.

Der Dienstserver 107 wertet die Netzdienstanforderung aus und stellt in dem Schritt 204 den Netzdienst für das Kommunikationsendgerät 101 bereit. Hierzu identifiziert der Dienstserver 107 zunächst den gewünschten Netzdienst. Zu diesem Zweck können die in der Netzdienstanforderung enthaltenen Signalisierungsinformationen herangezogen werden. Dann führt der Dienstserver 107 die im Rahmen des Netzdienstes vorgesehenen Operationen aus.

Wie zuvor erläutert kann es dabei vorgesehen sein, vorgegebene Informationen oder ein vorgegebenes Menü über den Übermittlungsdienst an das Kommunikationsendgerät 101 zu senden. Innerhalb des Kommunikationsendgeräts 101 steuert der Diensthandler oder eine mit dem Diensthandler in Verbindung stehende weitere Applikation die Anzeige der Informationen bzw. des Menüs. Im Falle der Darstellung eines Menüs wird zudem die Auswahl eines Menüpunkts durch den Nutzer erfasst und über den Übermittlungsdienst an den Dienstserver 107 gemeldet.

Obwohl die Erfindung in den Zeichnungen und der vorausgegangenen Darstellung im Detail beschrieben wurde, sind die Darstellungen illustrativ bzw. beispielhaft und nicht einschränkend zu verstehen; insbesondere ist die Erfindung nicht auf die erläuterten Ausführungsbeispiele beschränkt. So kann der dargestellte Mechanismus nicht nur von einem Dritten zum Initiieren eines Netzdienstes genutzt werden, sondern auch von dem Netzwerkbetreiber selbst. So kann anstelle des Anbieterservers 109 des Dritten ein entsprechender Anbieterserver 109 des Netzwerkbetreibers den Start der Netzdienste initiieren. Weitere Varianten der Erfindung und ihre Ausführung ergeben sich für den Fachmann aus der vorangegangenen Offenbarung, den Figuren und den Patentansprüchen.

In den Patentansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Patentansprüchen genannten Einheiten beziehungsweise Einrichtungen ausführen.

In den Patentansprüchen angegebene Bezugszeichen sind nicht als Beschränkungen der eingesetzten Mittel und Schritte anzusehen.

## Patentansprüche

1. Verfahren zum Zugreifen auf einen Netzdienst in einem Kommunikationsnetzwerk (102), bei dem ein mit dem Kommunikationsnetzwerk (102) verbundenes Kommunikationsendgerät (101) eine Netzdienstanforderung zum Aufruf des Dienstes an das Kommunikationsnetzwerk (102) sendet, wobei in dem Kommunikationsendgerät (101) eine Nachricht einer Servereinrichtung (108; 109) mit wenigstens einer Anweisung empfangen und an eine Einrichtung des Kommunikationsendgeräts (101) weitergeleitet wird und die Einrichtung aufgrund des Empfangs der Nachricht das Senden der Netzdienstanforderung in Abhängigkeit von der Anweisung steuert, wobei die Anweisung für die Anforderung des Netzdienstes vorgesehene Signalisierungsinformationen und/oder wenigstens einen für die Initiierung des Sendens der Netzdienstanforderung zu verwendenden Befehl umfasst,
**dadurch gekennzeichnet,**
**dass** die Anweisung mehrere Befehle zur Initiierung des Sendens der Netzdienstanforderung umfasst, und die Einrichtung aus den Befehlen einen Befehl auswählt, der von einer SIM-Karte des Endgeräts unterstützt wird.

2. Verfahren nach Anspruch 1, wobei die Nachricht in dem Kommunikationsendgerät (101) transparent zu der Einrichtung weitergleitet wird.

3. Verfahren nach Anspruch 1 oder 2, wobei es sich bei der Nachricht um eine Kurznachricht, insbesondere eine SMS-Nachricht, handelt.

4. Verfahren nach einem der vorangegangenen Ansprüche, wobei die Einrichtung eine Softwareapplikation in einer SIM-Karte (106) des Kommunikationsendgeräts (101) umfasst.

5. Verfahren nach einem der vorangegangenen Ansprüche, wobei die Netzdienstanforderung über einen dem Netzdienst zugeordneten Übermittlungsdienst übermittelt wird, insbesondere als eine USSD-Nachricht.

6. Verfahren nach einem der vorangegangenen Ansprüche, wobei die Netzdienstanforderung in der Einrichtung erzeugt wird und die Einrichtung das Kommunikationsendgerät (101) anweist, die Netzdienstanforderung mittels des Übermittlungsdienstes zu senden.

7. Verfahren nach einem der vorangegangenen Ansprüche, wobei die Einrichtung nach Maßgabe der Anweisung Signalisierungsinformationen bereitstellt, insbesondere Signalisierungsinformationen zum Aufbau eines Anrufs, und die Netzdienstanforderung in dem Kommunikationsendgerät (101) anhand der Signalisierungsinformationen erzeugt und dem Übermittlungsdienst zugeordnet wird.

8. Verfahren nach Anspruch 6 oder 7, wobei die Einrichtung ein Card-Application-Toolkit-Kommando verwendet, um das Kommunikationsendgerät (101) anzuweisen, die Netzdienstanforderung zu senden, oder die Signalisierungsinformationen bereitzustellen.

9. Verfahren nach einem der vorangegangenen Ansprüche, bei dem die Netzdienstanforderung in dem Kommunikationsnetzwerk (102) an einen dem Netzdienst zugeordneten Dienstserver (107) weitergeleitet wird, der den Netzdienst aufgrund des Empfangs der Netzdienstanforderung für das Kommunikationsendgerät (101) bereitstellt.

10. Verfahren nach einem der vorangegangenen Ansprüche, bei dem der Netzdienst die Bereitstellung von vorkonfigurierten Informationen zur Anzeige an dem Kommunikationsendgerät (101) umfasst, insbesondere ein Menü, aus dem mittels des Kommunikationsendgeräts (101) eine Auswahl getroffen werden kann, die über den Übermittlungsdienst an das Kommunikationsnetzwerk (102) gemeldet wird.

11. Verfahren nach Anspruch 10, wobei die Informationen und/oder die Meldung über die Auswahl anhand einer USSD-Nachricht übermittelt werden.

12. Kommunikationsendgerät (101) zur Nutzung eines Netzdienstes in einem Kommunikationsnetzwerk (102), wobei das Kommunikationsendgerät (101) mit dem Kommunikationsnetzwerk (102) verbindbar ist und dazu ausgestaltet ist, eine Netzdienstanforderung zum Aufruf des Netzdienstes an das Kommunikationsnetzwerk (102) zu senden, wobei eine Einrichtung enthalten ist, die dazu konfiguriert ist, eine Nachricht einer Servereinrichtung (108; 109) mit wenigstens einer Anweisung zu empfangen und das Senden der Netzdienstanforderung aufgrund des Empfangs der Nachricht in Abhängigkeit von der Anweisung zu steuern, wobei die Anweisung für die Anforderung des Netzdienstes vorgesehene Signalisierungsinformationen und/oder wenigstens einen für die Initiierung des Sendens der Netzdienstanforderung zu verwendenden Befehl umfasst
**dadurch gekennzeichnet,**
**dass** die Anweisung mehrere Befehle zur Initiierung des Sendens der Netzdienstanforderung umfasst, und die Einrichtung aus den Befehlen einen Befehl auswählt, der von einer SIM-Karte des Endgeräts unterstützt wird.

13. Servereinrichtung (108; 109) zum Initiieren eines Netzdienstes für ein mit einem Kommunikationsnetzwerk (102) verbundenes Kommunikationsendgerät (101), wobei die Servereinrichtung (108; 109) mit dem Kommunikationsnetzwerk (102) verbindbar ist und dazu ausgestaltet ist, eine Nachricht zu erzeugen und über das Kommunikationsnetzwerk (102) an das Kommunikationsendgerät (101) zu senden, und wobei die Nachricht wenigstens eine Anweisung enthält, die es einer Einrichtung des Kommunikationsendgeräts (101) ermöglicht, eine Übermittlung von dem Kommunikationsendgerät (101) an das Kommunikationsnetzwerk (102) zu steuern, wobei die Anweisung für die Anforderung des Netzdienstes vorgesehene Signalisierungsinformationen und/oder wenigstens einen für die Initiierung des Sendens der Netzdienstanforderung zu verwendenden Befehl umfasst
**dadurch gekennzeichnet,**
**dass** die Anweisung mehrere Befehle zur Initiierung des Sendens der Netzdienstanforderung umfasst, und die Einrichtung aus den Befehlen einen Befehl auswählt, der von einer SIM-Karte des Endgeräts unterstützt wird.

## Claims

1. A method for accessing a network service in a communication network (102), in which a communication terminal device (101) that is connected to the communication network (102) sends to the communication network (102) a network service request for calling the service, whereby in the communication terminal device (101), a message from a server unit (108; 109) containing at least one instruction is received and forwarded to a unit of the communication terminal device (101) and, on the basis of the receipt of the message, the unit controls the sending of the network service request as a function of the instruction, whereby the instruction comprises signaling information intended for requesting the network service and/or at least one command to be used for initiating the sending of the network service request,
**characterized in that**
the instruction comprises several commands for initiating the sending of the network service request and, from among the commands, the unit selects a command that is supported by a SIM card of the terminal device.

2. The method according to claim 1, wherein the message in the communication terminal device (101) is transparently forwarded to the unit.

3. The method according to one claim 1 or 2, wherein the message is a short message, especially an SMS message.

4. The method according to one of the preceding claims, wherein the unit comprises a software application in a SIM card (106) of the communication terminal device (101).

5. The method according to one of the preceding claims, wherein the network service request is transmitted via a transmission service associated with the network service, especially as a USSD message.

6. The method according to one of the preceding claims, wherein the network service request is generated in the unit and the unit instructs the communication terminal device (101) to send the network service request via the transmission service.

7. The method according to one of the preceding claims, wherein the unit provides signaling information in accordance with the instruction, especially signaling information for establishing a call, and the network service request is generated in the communication terminal device (101) on the basis of the signaling information and subsequently associated with the transmission service.

8. The method according to claim 6 or 7, wherein the unit uses a card application toolkit command to instruct the communication terminal device (101) to send the network service request or to provide the signaling information.

9. The method according to one of the preceding claims, wherein the network service request in the communication network (102) is forwarded to a device server (107) that is associated with the network service and that provides the network service on the basis of the receipt of the network service request for the communication terminal device (101).

10. The method according to one of the preceding claims, wherein the network service comprises the provision of preconfigured information for display on the communication terminal device (101), especially a menu via which the communication terminal device (101) can be used to make a selection that is reported to the communication network (102) via the transmission service.

11. The method according to claim 10, wherein the information and/or the report about the selection arc transmitted in the form of a USSD message.

12. A communication terminal device (101) for using a network service in a communication network (102), whereby the communication terminal device (101) can be connected to the communication network (102) and is configured to send to the communication network (102) a network service request for calling the network service, whereby it comprises a unit that is configured to receive a message from a server unit (108; 109) containing at least one instruction and to control the sending of the network service request on the basis of the receipt of the message as a function of the instruction, whereby the instruction comprises signaling information intended for requesting the network service and/or at least one command to be used for initiating the sending of the network service request,
**characterized in that**
the instruction comprises several commands for initiating the sending of the network service request and, from among the commands, the unit selects a command that is supported by a SIM card of the terminal device.

13. A server unit (108; 109) for initiating a network service for a communication terminal device (101) that is connected to the communication network (102), whereby the server unit ( 108; 109) can be connected to the communication network (102) and is configured to generate a message and to send it via the communication network (102) to the communication terminal device (101), and whereby the message contains at least one instruction that allows a unit of the communication terminal device (101) to control a transmission from the communication terminal device (101) to the communication network (102), whereby the instruction comprises signaling information intended for requesting the network service and/or at least one command to be used for initiating the sending of the network service request,
**characterized in that**
the instruction comprises several commands for initiating the sending of the network service request and, from among the commands, the unit selects a command that is supported by a SIM card of the terminal device.

## Revendications

1. Procédé pour accéder à un service de réseau dans un réseau de communication (102), selon lequel un terminal de communication (101) relié au réseau de communication (102) envoie au réseau de communication (102) une requête de service de réseau pour demander le service, un message d'un dispositif serveur (108 ; 109) comportant au moins une instruction étant reçu dans le terminal de communication (101) et réacheminé vers un dispositif du terminal de communication (101), et le dispositif commandant, sur la base de la réception du message, l'émission de la requête de service de réseau en fonction de l'instruction, l'instruction comprenant des informations de signalisation prévues pour la requête du service de réseau et/ou au moins un ordre à utiliser pour l'initialisation de l'émission de la requête de service de réseau, **caractérisé en ce que** l'instruction comprend plusieurs ordres pour initialiser l'émission de la requête de service de réseau et **en ce que** le dispositif sélectionne, parmi les ordres, un ordre qui est supporté par une carte SIM du terminal.

2. Procédé selon la revendication 1, le message étant réacheminé, dans le terminal de communication (101), de manière transparente vers le dispositif.

3. Procédé selon la revendication 1 ou 2, le message étant un message court, et plus particulièrement un message SMS.

4. Procédé selon l'une des revendications précédentes, le dispositif comprenant une application logicielle dans une carte SIM (106) du terminal de communication (101).

5. Procédé selon l'une des revendications précédentes, la requête de service de réseau étant transmise via un service de transmission associé au service de réseau, en particulier sous la forme d'un message USSD.

6. Procédé selon l'une des revendications précédentes, la requête de service de réseau étant générée dans le dispositif et le dispositif ordonnant au terminal de communication (101) d'émettre la requête de service de réseau au moyen du service de transmission.

7. Procédé selon l'une des revendications précédentes, le dispositif fournissant, conformément à l'instruction, des informations de signalisation, et plus particulièrement des informations de signalisation pour établir un appel, et la requête de service de réseau étant générée dans le terminal de communication (101) sur la base des informations de signalisation et étant associée au service de transmission.

8. Procédé selon la revendication 6 ou 7, le dispositif utilisant une instruction de boîte à outils d'application carte pour ordonner au terminal de communication (101) d'émettre la requête de service de réseau ou de fournir les informations de signalisation.

9. Procédé selon l'une des revendications précédentes, selon lequel la requête de service de réseau est réacheminée, dans le réseau de communication (102), vers un serveur de services (107) qui est associé au service de réseau et qui fournit le service de réseau au terminal de communication (101) sur la base de la réception de la requête de service de réseau

10. Procédé selon l'une des revendications précédentes, selon lequel le service de réseau inclut la fourniture d'informations préconfigurées pour affichage sur le terminal de communication (101), en particulier un menu à partir duquel il est possible d'effectuer, au moyen du terminal de communication (101), une sélection qui est notifiée au réseau de communication (102) via le service de transmission.

11. Procédé selon la revendication 10, les informations et/ou la notification de la sélection étant transmises à l'aide d'un message USSD.

12. Terminal de communication (101) pour l'utilisation d'un service de réseau dans un réseau de communication (102), le terminal de communication (101) pouvant être relié au réseau de communication (102) et étant conçu pour envoyer au réseau de communication (102) une requête de service de réseau pour demander le service de réseau, un dispositif étant compris, lequel est configuré pour recevoir un message d'un dispositif serveur (108 ; 109) comportant au moins une instruction et pour commander l'émission de la requête de service de réseau sur la base de la réception du message en fonction de l'instruction, l'instruction comprenant des informations de signalisation prévues pour la requête du service de réseau et/ou au moins un ordre à utiliser pour l'initialisation de l'émission de la requête de service de réseau, **caractérisé en ce que** l'instruction comprend plusieurs ordres pour initialiser l'émission de la requête de service de réseau et **en ce que** le dispositif sélectionne, parmi les ordres, un ordre qui est supporté par une carte SIM du terminal.

13. Dispositif serveur (108 ; 109) pour initialiser un service de réseau pour un terminal de communication (101) relié à un réseau de communication (102), le dispositif serveur (108 ; 109) pouvant être relié au réseau de communication (102) et étant conçu pour générer un message et l'envoyer au terminal de communication (101) via le réseau de communication (102), et le message contenant au moins une instruction qui permet à un dispositif du terminal de communication (101) de commander une transmission du terminal de communication (101) vers le réseau de communication (102), l'instruction comprenant des informations de signalisation prévues pour la requête du service de réseau et/ou au moins un ordre à utiliser pour l'initialisation de l'émission de la requête de service de réseau, **caractérisé en ce que** l'instruction comprend plusieurs ordres pour initialiser l'émission de la requête de service de réseau et **en ce que** le dispositif sélectionne, parmi les ordres, un ordre qui est supporté par une carte SIM du terminal.
